# FASCICULE DE BREVET EUROPEEN

(11) **EP 3 631 424 B1**
(45) Date de publication et mention de la délivrance du brevet: **15.01.2025**
(21) Numéro de dépôt: 18724589.9
(22) Date de dépôt: 23.05.2018
(51) Int. Cl.: G01N 21/88, G01N 21/47, G01B 11/30, G01N 21/956

(54) **DISPOSITIF DE DÉTECTION D'UN DÉFAUT SUR UNE SURFACE PAR ÉCLAIRAGE MULTIDIRECTIONNEL**
VORRICHTUNG ZUR DETEKTION EINES DEFEKTS AUF EINER OBERFLÄCHE UNTER VERWENDUNG VON MULTIDIREKTIONALER BELEUCHTUNG
DEVICE FOR DETECTING A DEFECT ON A SURFACE USING MULTIDIRECTIONAL LIGHTING

(30) Priorité: 24.05.2017 FR 1754637
(43) Date de publication de la demande: 08.04.2020
(73) Titulaire: FRAMATOME, 92400 Courbevoie (FR)
(72) Inventeur: SKOPINSKI, Clément, 71100 Chalon-sur-Saône (FR)
(74) Mandataire: Lavoix
(86) Numéro de dépôt international: PCT/EP2018/063437
(87) Numéro de publication internationale: WO 2018/215504

(56) Documents cités:
- WO-A1-02/090952
- DE-A1- 3 540 288
- JP-A- 2012 047 673
- US-A- 5 754 283
- US-A1- 2015 330 905

## Description

La présente invention concerne un dispositif de détection d'un défaut sur une surface.

Un dispositif actuel consiste essentiellement en un dispositif optique apte à acquérir une image ou un film de la surface. Cette image ou ce film sont ensuite visionnés par un opérateur qui indique les défauts qu'il a repérés.

Cependant, l'opérateur est susceptible de ne pas repérer un défaut par manque d'attention. De plus, les critères permettant de juger d'un défaut sont subjectifs, c'est-à-dire que la définition de ce qu'est un défaut est susceptible de varier selon l'opérateur.

Une solution qui est souvent mise en oeuvre pour pallier ces problèmes est la visualisation du film ou de l'image par plusieurs opérateurs. De plus, des exemples d'image de surface sont utilisés afin de montrer ce qui est un défaut ou non.

Cependant, les exemples représentés ne sont ni exhaustifs ni reproductibles.

Dans l'éventualité d'un défaut, des experts sont consultés. De nombreux allers-retours entre experts sont alors réalisés, les experts n'étant pas nécessairement d'accord entre eux.

L'analyse d'une surface est susceptible d'être longue et complexe.

JP 2012 047673 A décrit un système d'inspection d'une surface. Son unité d'éclairage comprend plusieurs sources lumineuses et un capot sur lequel sont disposées les sources lumineuses. Le capot est composé d'un élément hémisphérique qui couvre l'objet inspecté. Une unité de contrôle de l'éclairage allume séquentiellement les sources lumineuses dans un ordre prédéterminé. L'unité de contrôle de l'imagerie fait en sorte que le capteur d'image capture une image en synchronisation avec le moment où l'unité de contrôle de l'éclairage allume une source lumineuse. Ainsi, si le nombre d'une image est connu, il est possible d'identifier la direction d'éclairage de l'objet inspecté.

WO 02/090952 A1 décrit un procédé d'examen d'une surface dans lequel la lumière qui frappe successivement la surface sous différents angles d'incidence et qui est réfléchie sur ladite surface est mesurée par un capteur d'images.

DE 35 40 288 A1 décrit un système d'inspection de soudures dans lequel la lumière est irradiée sur une pièce soudée à différents angles d'incidence par un émetteur de lumière afin de recueillir des informations indiquant la configuration tridimensionnelle de la pièce soudée et de déterminer si la configuration est acceptable ou non.

L'invention a notamment pour but de remédier à cet inconvénient en fournissant un dispositif permettant une détection simple et sûr d'un défaut sur une surface.

À cet effet, l'invention a notamment pour objet un dispositif de détection d'un défaut sur une surface selon la revendication 1.

Le dispositif de détection selon l'invention peut comporter en outre des caractéristiques selon les revendications 2 à 10.

L'invention sera mieux comprise à la lecture de la description qui va suivre, donnée uniquement à titre d'exemple et faite en se référant aux figures annexées parmi lesquelles :
- la figure 1 est une vue schématique en coupe d'un exemple de dispositif selon un mode de réalisation de l'invention,
- la figure 2 est une vue schématique du dispositif de la figure 1,
- la figure 3 est un schéma d'étapes d'un mode de réalisation du procédé mettant en oeuvre un dispositif de l'invention,
- la figure 4 est un exemple de surface sur laquelle est utilisé le dispositif de détection de la figure 1,
- la figure 5 est un exemple de l'évolution de trois paramètres sur une ligne de la surface de la figure 4,
- la figure 6 est un exemple de détection de défauts sur la surface de la figure 4, et
- la figure 7 est un exemple de paramètres en un ensemble de points présentant un défaut et en un ensemble de points ne présentant pas de défaut.

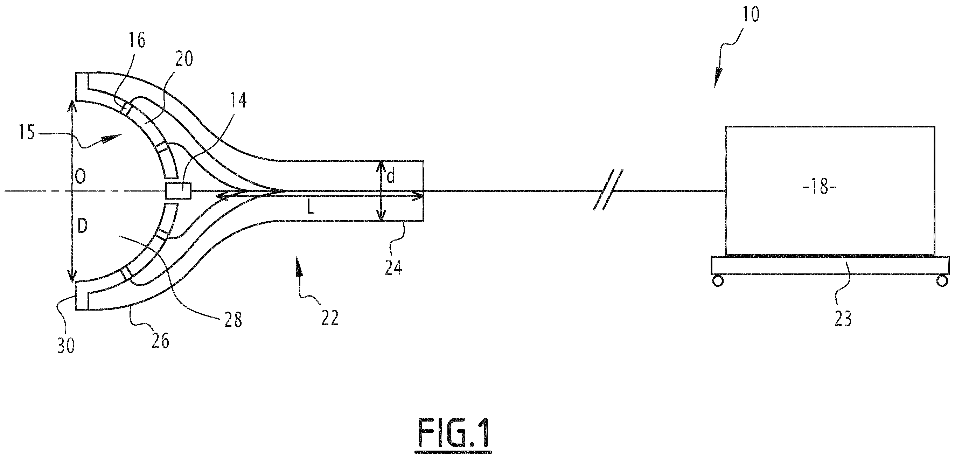

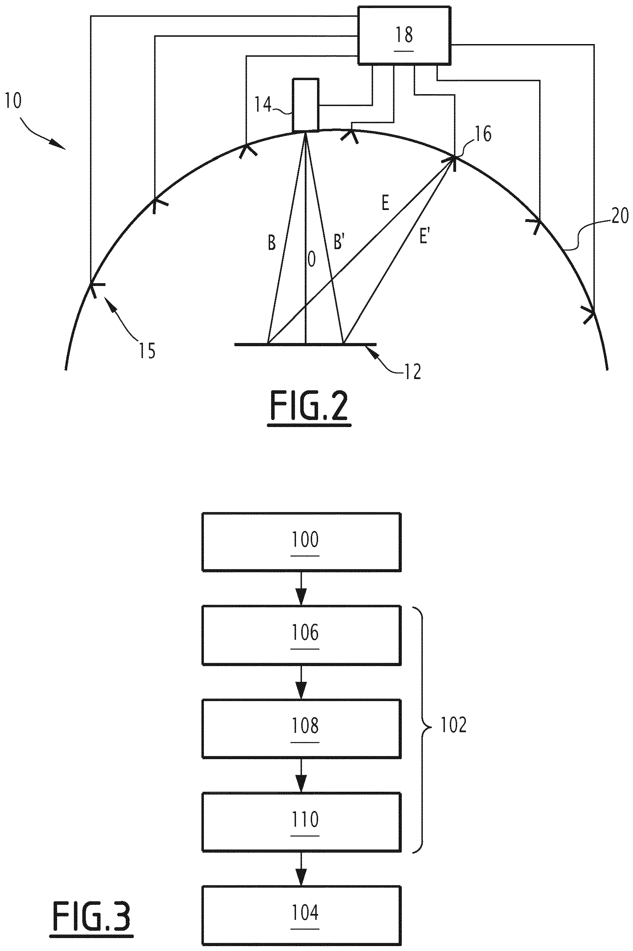

Un exemple de dispositif de détection 10 d'un défaut dans une surface 12 est représenté aux figures 1 et 2.

Le dispositif de détection 10 comprend un dispositif optique 14, un dispositif d'éclairage 15 comprenant un premier nombre de source(s) de lumière 16 et un dispositif électronique de calcul 18.

Le dispositif optique 14 a un axe optique aligné avec une direction optique O donnée. Il possède un champ d'acquisition.

Le dispositif optique 14 est apte à acquérir une image de la surface 12 selon la direction optique O donnée. Le champ d'acquisition coïncide avec la surface 12 à inspecter, de sorte que l'image acquise représente la surface 12.

Le dispositif optique comprend, par exemple, en entrée une optique adaptant l'image acquise par le dispositif optique, par exemple, le champ d'acquisition.

Pour chaque point de la surface, on définit une direction d'observation B, B' entre le dispositif optique 14 et le point de la surface 12.

Le champ d'acquisition est ici fixe.

La direction optique O est typiquement sensiblement perpendiculaire à la surface 12. En variante, la direction optique O n'est pas perpendiculaire à la surface 12.

Le dispositif optique 14 est, par exemple, une caméra.

Le dispositif optique 14 est, plus particulièrement un dispositif à transfert de charge, plus couramment appelé capteur CCD de l'anglais « *charge-couple device* », ou un capteur CMOS de l'anglais « *complementary métal oxide semi-conductor* »*.*

Alternativement, le champ d'acquisition coïncide uniquement avec une partie de la surface 12 et le dispositif de détection 10 est apte à être déplacé par rapport à la surface 12 de sorte à pouvoir acquérir l'ensemble de la surface 12 en plusieurs parties.

Chaque image acquise est constituée d'une matrice de pixels de dimension i*j, avec i le nombre de lignes horizontales et j le nombre de lignes verticales de la matrice, avec au moins un des deux paramètres (i,j) supérieur à 1. Le pixel est, par exemple, un rectangle de taille notée h*L, avec h sa hauteur et L sa largeur. La hauteur h est égale à la largeur L. En variante, la hauteur est différente de la largeur

On appelle par la suite indifféremment par « point de la surface » un pixel d'une image acquise ou une partie de la surface acquise en un pixel.

Les sources de lumière 16 sont aptes à éclairer la surface 12.

Pour chaque point de la surface, les sources de lumière 16 ont chacune une direction d'éclairage E, E' donnée reliant la source de lumière au point de la surface 12. La direction d'éclairage est différente pour chaque source de lumière.

Les sources de lumière 16 sont typiquement disposées selon une demi-sphère 20 entourant la surface 12.

La demi-sphère a un diamètre D inférieur ou égal à 50 mm (millimètres), de préférence inférieur ou égal à 20 mm.

Le diamètre D est, par ailleurs, strictement supérieur à 5 mm.

Le premier nombre de sources de lumière 16 est compris entre 32 et 128, plus particulièrement égal à 96.

Les sources de lumière 16 sont, par exemple, des diodes électroluminescentes (DEL).

Elles peuvent être éteintes ou allumées. Elles sont configurées pour pouvoir être allumées indépendamment les unes des autres.

Les sources de lumière 16 ont une intensité lumineuse identique.

En variante, le dispositif d'éclairage 15 comprend un ou plusieurs éclairages éventuellement non identiques.

Le dispositif électronique de calcul 18 est, par exemple, un ordinateur, un calculateur, un module de calcul, au moins un composant logique programmable tel que des FPGA (de l'anglais *Field-Programmable Gate Array*) ou encore au moins un circuit intégré dédié tel que des ASIC (de l'anglais *Application-Specific Integrated Circuit*)*.*

Le dispositif électronique de calcul 18 est, par exemple, relié au dispositif optique 14 et au dispositif d'éclairage 15.

La liaison est, par exemple, réalisée par câbles.

Alternativement, la liaison entre le dispositif électronique de calcul 18 et le dispositif optique 14 et/ou le dispositif d'éclairage 15 est réalisée par technologie sans fil. La technologie sans fil est, par exemple, selon un protocole Wifi correspondant à un ensemble de protocoles de communication sans fil régis par les normes du groupe IEEE 802.11 (ISO/CEI 8802-11).

Le dispositif électronique de calcul 18 est apte à allumer ou éteindre chacune des sources de lumière 16 indépendamment les unes des autres.

Le dispositif électronique de calcul 18 est, en outre, prévu pour déclencher l'acquisition d'au moins une image de la surface par le dispositif optique 14.

Il est ainsi configuré pour entraîner l'acquisition d'une pluralité d'images de la surface par le dispositif optique 14, chaque image étant acquise selon la direction optique O donnée et avec une unique source de lumière allumée ou une combinaison définie de sources uniques allumées. Cette source ou cette combinaison est différente pour chaque image. Chaque image correspond à un éclairage différent.

Pour chaque point de la surface, le dispositif électronique de calcul 18 est configuré pour calculer à partir des images acquises une pluralité de paramètres, les paramètres comprenant des coefficients d'une équation caractérisant la réponse dudit point de la surface en fonction de la direction d'éclairage et d'une direction d'observation, puis à déduire des paramètres calculés si la surface présente un défaut audit point.

Ce dernier point est détaillé ci-après en relation avec le procédé de détection d'un défaut.

Le dispositif 10 comprend ici un outil 22 comprenant le dispositif optique 14 et le dispositif d'éclairage 15.

Dans l'exemple représenté, le dispositif électronique de calcul 18 est placé à l'extérieur de l'outil 22.

Dans le cas d'une liaison du dispositif électronique de calcul 18 avec le dispositif optique 14 et/ou le dispositif d'éclairage 15 par câble, le dispositif électronique de calcul 18 est, par exemple, placé sur un support 23 déplaçable. Le support 23 comprend, par exemple, des roulettes.

L'outil 22 a des dimensions telles qu'il est compris dans un cylindre ayant une longueur égale à 200 mm, plus particulièrement égale à 150 mm, et un diamètre égal à 100 mm, plus particulièrement égal à 75 mm.

L'outil 22 a une masse inférieure à 3 kg (kilogrammes), plus spécifiquement inférieure à 2 kg.

L'outil comprend un manche 24 et une tête 26 solidaires l'un de l'autre. L'outil 22 est, par exemple, constitué du manche 24 et de la tête 26.

Le manche 24 et la tête 26 sont immobiles l'un par rapport à l'autre. Ils sont par exemple venus de matière.

En variante, le manche 24 et la tête 26 sont solidaires en une zone de liaison, le manche 24 étant apte à être déplacé par rapport à la tête 26 selon une liaison pivot ou une liaison rotule.

Le manche 24 est apte à être saisi par un utilisateur.

Il s'étend principalement selon une direction longitudinale, par exemple, alignée avec la direction optique O.

Le manche 24 est sensiblement cylindrique.

La tête 26 comprend ici le dispositif optique 14 et le dispositif d'éclairage 15.

La tête 26 définit une concavité 28.

La concavité 28 est ouverte, c'est-à-dire qu'elle communique avec l'extérieur de l'outil 22.

La concavité 28 est ouverte à l'opposé du manche 24.

La concavité définit une forme interne correspondant à la demi-sphère 20 du dispositif d'éclairage 15.

La tête 26 est reliée au manche 24 en un point aligné selon la direction longitudinale du manche 24 avec le sommet de la demi-sphère 20. Plus particulièrement, le manche 24 est aligné selon sa direction longitudinale avec le sommet de la demi-sphère 20.

Les sources lumineuses 16 sont aptes à éclairer la concavité 28.

Le dispositif optique 14 est placé au sommet de la demi-sphère 20.

L'axe optique du dispositif optique 14 s'étend dans la concavité 28.

La tête 26 est apte à être appliquée en contact avec la surface 12. Plus particulièrement, elle comprend une surface d'appui 30 apte à être posée en contact avec la surface 12, de manière à ce que la surface 12 soit apte à être éclairée avec le dispositif d'éclairage 15 et acquise avec le dispositif optique 14.

La surface d'appui 30 est adaptée pour que la concavité 28 de la tête 26 forme un espace fermé lorsque la surface d'appui 30 est posée en contact avec la surface 12.

La surface d'appui 30 s'étend autour d'un cercle définissant un bord de la concavité 28.

La surface d'appui 30 est comprise dans un plan sensiblement perpendiculaire à la direction optique O du dispositif optique 14.

La surface d'appui 30 est un anneau dont un rayon interne correspond à un rayon de la demi-sphère 20 du dispositif d'éclairage 15.

L'outil 22 comprend, en outre, au moins une pièce d'adaptation ayant une forme généralement cylindrique s'étendant entre une première et une deuxième surfaces d'extrémité. La première surface d'extrémité est apte à coopérer avec la surface d'appui 30. La deuxième surface d'extrémité est apte à coopérer avec la surface 12 sur laquelle l'outil est destiné à être appliqué. En particulier, si la surface 12 est courbe, la deuxième surface d'extrémité est un anneau présentant une courbure similaire à la surface. La pièce d'adaptation est, par exemple, opaque, de sorte que la lumière est maintenue dans l'espace défini entre les sources de lumière 16, la surface 12 et la pièce d'adaptation.

En variante, le dispositif électronique de calcul 18 est compris dans l'outil 22, plus particulièrement dans le manche 24.

Un procédé de détection d'un défaut dans une surface va maintenant être décrit en regard de la figure 2.

Le procédé est ici mis en oeuvre par le dispositif décrit précédemment.

Le procédé comprend les étapes suivantes :
- acquisition 100,
- calcul de paramètres 102, et
- déduction de la présence d'un défaut 104.

Pendant l'acquisition 100, le dispositif 10 est placé en contact avec la surface 12, plus particulièrement au niveau de la surface d'appui 30 du dispositif 10.

Si la surface 12 est courbe, une pièce d'adaptation est avantageusement utilisée entre l'outil et la surface 12 pour permettre une meilleure adaptation de l'outil sur la surface.

Pendant l'acquisition 100, une pluralité d'images 200 de la surface est acquise par le dispositif optique 14. Une telle image est représentée à la figure 3.

Chaque image 200 est acquise avec un éclairage de la surface 12 selon une direction d'éclairage donnée E, E' pour chaque point de la surface et avec l'axe optique du dispositif optique 14 selon une direction optique O donnée.

Les images 200 sont acquises avec différentes directions d'éclairage E, E' ou combinaisons de directions d'éclairage.

Dans le mode de réalisation représenté, les directions d'éclairage E, E' diffèrent pour chaque image acquise et la direction optique O est invariable et sensiblement perpendiculaire à la surface 12.

Pour chaque image acquise, une unique source de lumière ou une combinaison définie de sources uniques 16 du dispositif d'éclairage est allumée, l'unique source de lumière ou la combinaison étant différente pour chaque image acquise.

L'ensemble des sources de lumière ou des combinaisons est tour à tour allumé, de sorte à acquérir une image par source de lumière ou par combinaison. En variante, certaines sources ou combinaisons ne sont pas allumées.

Puis, pendant le calcul de paramètres 102, pour chaque point 202 de la surface, c'est-à-dire ici pour chaque pixel des images acquises, une pluralité de paramètres sont calculés à partir des images acquises.

Les paramètres sont calculés à partir des coefficients d'une équation caractérisant la réponse dudit point de la surface en fonction de la direction d'éclairage E, E' et d'une direction d'observation B, B'.

Pour chaque point 202 de la surface 200, le calcul de paramètres 102 comprend ici les étapes suivantes :
- définition d'une grandeur 106,
- choix de modèle 108, et
- calcul de coefficients 110.

Lors de la définition d'une grandeur 106, une grandeur évoluant en fonction des images acquises est définie.

Par exemple, la grandeur est ici l'intensité de gris du point de la surface, l'intensité de gris étant variable selon les images acquises.

En parallèle un modèle représentant l'évolution de la grandeur est choisi 108. Le modèle dépend de la ou les direction(s) d'éclairage E, E' et/ou de la direction d'observation B, B'. Le modèle comprend des coefficients.

Ici le modèle dépend uniquement de la direction d'éclairage. Il a, par exemple, la forme suivante : *G*(*E*) = *a*₀ × *Dᵤ*² + *a*₁ × *Dᵥ*² + *a*₂ × *Dᵤ* × *Dᵥ* + *a*₃ × *Dᵤ* + *a*₄ × *Dᵥ* + *a*₅, avec G la grandeur, E la direction d'éclairage, a₀, a₁, a₂, a₃ a₄ et a₅ les coefficients et Dᵤ et Dᵥ étant des coordonnées du vecteur reliant la source d'éclairage au point de la surface.

Les coefficients a₀, a₁, a₂, a₃ a₄ et a₅ sont ici indéterminés.

Puis, lors du calcul des coefficients 110, une application de la grandeur sur le modèle est réalisée de sorte à calculer des valeurs de a₀, a₁, a₂, a₃ a₄ et a₅.

Les paramètres sont ici égaux aux coefficients a₀, a₁, a₂, a₃ a₄ et a₅ ainsi calculés.

Pour chaque point de la surface, la même grandeur et le même modèle sont définis. Ainsi pour chaque point de la surface, on obtient des paramètres a₀, a₁, a₂, a₃ a₄ et a₅. On obtient, par exemple, une cartographie de la surface représentant les valeurs des paramètres pour chaque point de la surface.

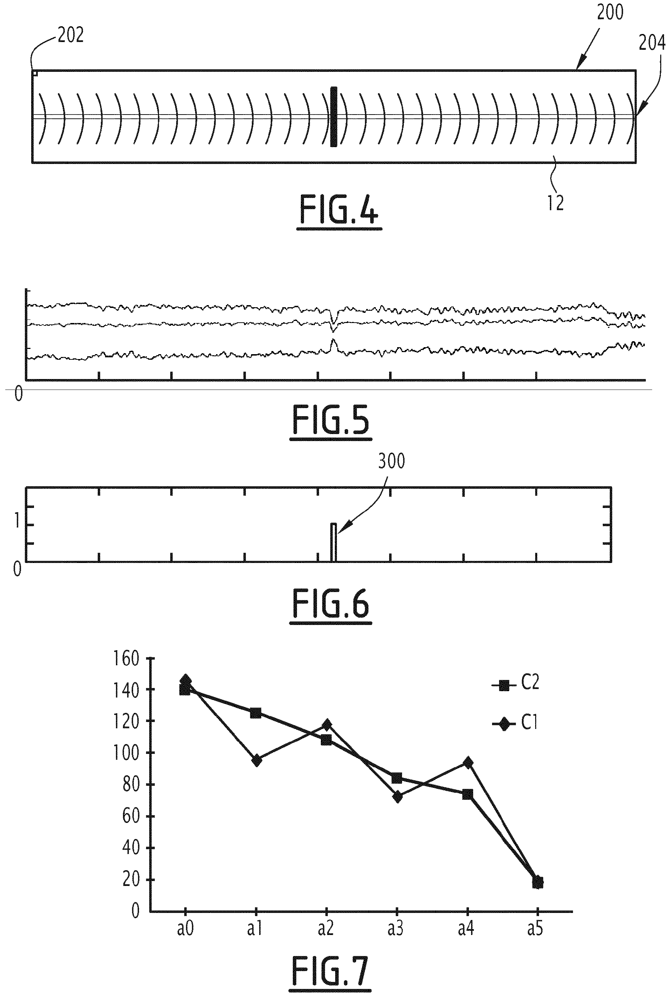

Sur la figure 5, est représentée l'évolution de trois paramètres le long de la ligne 204 de points de la surface représentée à la figure 4.

En variante, les paramètres sont d'autres valeurs calculées à partir des coefficients.

Lors de la déduction de la présence de défaut 104, il est déduit à partir des paramètres calculés si la surface présente un défaut audit point.

Sur la figure 7, par exemple, les paramètres sont représentés avec la courbe C₁ en un point ne présentant pas de défaut et avec la courbe C₂ en un point présentant un défaut.

Le résultat obtenu à l'étape 104 pour chaque point est, par exemple, un booléen représentant binairement si un défaut est détecté audit point.

Sur la figure 6, est représenté le booléen le long de la ligne 204 : si le booléen est égal à 0, aucun défaut n'est détecté ; si le booléen est égal à 1, un défaut est détecté.

Ainsi, sur la figure 6, un unique défaut 300 est détecté et s'étend sur plusieurs points adjacents.

Un ou plusieurs critères sont utilisés pour déduire la présence d'un défaut à partir des paramètres. Ces critères sont décrits ci-après et sont utilisés seul ou en combinaison afin de détecter un défaut. Par exemple, un défaut est détecté quand au moins deux des critères sont validés.

Un premier critère est qu'un défaut est détecté audit point lorsqu'au moins un paramètre audit point n'est pas compris dans un intervalle.

Plus particulièrement l'intervalle est centré autour de la valeur moyenne dudit paramètre sur l'ensemble des points de la surface.

En variante, l'intervalle est un intervalle donné.

Alternativement, un défaut est détecté audit point lorsqu'au moins un nombre donné de paramètres audit point ne sont pas compris dans un intervalle respectif.

Un deuxième critère est qu'un défaut est détecté audit point lorsqu'au moins un paramètre audit point diffère d'une valeur choisie comme seuil de détection par rapport au bruit de fond dudit paramètre en un point adjacent, la surface ne présentant pas de défaut au point adjacent.

Ainsi, de proche en proche, la surface est analysée.

Il convient alors de définir au moins un premier point de la surface pour lequel un défaut n'est pas présent.

En variante, le dispositif électronique de calcul 18 considère qu'un endroit de la surface est dépourvu de défaut et, de proche en proche, détecte des défauts dans la surface. Si le résultat est jugé non acceptable, par exemple, si une majorité de la surface est détectée comme présentant un défaut, alors l'étape est réitérée en considérant qu'un autre endroit, différent de précédemment, est dépourvu de défaut.

Un troisième critère repose sur la géométrie d'un signal.

Le signal est ici l'évolution d'un ou plusieurs paramètres sur un ensemble de points défini. Les points de l'ensemble sont ici adjacents. L'ensemble de points est, par exemple, une zone centrée sur un point central.

On définit des motifs correspondant à des cas dans lesquels un défaut est détecté et/ou dans lesquels aucun défaut n'est détecté. La forme du signal est comparée aux motifs, de sorte à décider si un défaut est détecté. Le défaut est détecté au point central, dans une zone comprenant le point central et incluse dans l'ensemble de points ou dans l'ensemble de points.

Ainsi, pour chaque point de la surface, il est déduit des paramètres si un défaut est présent ou non.

Cela est, par exemple, représentable sur une cartographie binaire de la surface afin de visualiser facilement les défauts.

En variante, les sources de lumière 16 n'ont pas une intensité lumineuse identique. Une calibration du dispositif est alors réalisée.

Avantageusement, en plus de la déduction de la présence d'un défaut, le procédé comprend une étape de catégorisation de la nature du défaut.

En fonction des critères précédemment décrits, la nature d'un défaut est définissable, par exemple, entre une fissure, une rayure, une déformation ou une porosité.

En variante, le calcul des paramètres 102 repose sur un autre modèle mathématique tel que la fonction de distribution de la réflectance bidirectionnelle (ou BRDF) ou la décomposition modale discrète (ou DMD) ou encore la fonction de texture bidirectionnelle (ou BTF de l'anglais « Bidirectional Texture Function »).

La déduction directe à partir de paramètres calculés à partir d'images acquises permet notamment de s'affranchir de la susceptibilité à la présence de défaut variant selon les opérateurs. Le procédé permet ainsi d'obtenir un résultat unique et objectif. Ainsi, le procédé est simplifié et sûr.

L'outil présente des dimensions réduites. Cela permet notamment d'inspecter une surface dont l'accessibilité est réduite. Cela permet également de diminuer la pénibilité du travail de l'utilisateur mettant en oeuvre le dispositif de détection, car l'outil est aisément portable par l'utilisateur, en particulier grâce à son manche.

De plus, le dispositif de détection est déplaçable par un utilisateur ou un système robotique. Cela permet notamment de mettre en oeuvre facilement l'inspection d'une surface.

## Revendications

1. Dispositif de détection d'un défaut sur une surface (12), le dispositif de détection (10) comprenant :
- un dispositif optique (14) ayant un axe optique, le dispositif optique (14) étant apte à acquérir une image de la surface (12) selon une direction optique donnée (O),
- un dispositif d'éclairage (15) comprenant une pluralité de sources lumineuses (16), les sources lumineuses (16) étant placées sur une demi-sphère (20), chaque source lumineuse (16) présentant un état éteint et un état allumé, chaque source lumineuse (16) présentant une direction d'éclairage (E, E'),
- un dispositif électronique de calcul (18),
le dispositif électronique de calcul (18) étant apte à commander le dispositif optique (14) et le dispositif d'éclairage (15) pour que le dispositif optique (14) acquière une pluralité d'images de la surface (12), différentes sources lumineuses (16) ou différentes combinaisons de sources lumineuses (16) étant allumées pour chaque image,
la demi-sphère (20) ayant un diamètre D inférieur ou égal à 50 mm (millimètres),
le dispositif d'éclairage (15) comprenant un premier nombre de sources de lumière (16), le premier nombre étant compris entre 32 et 128, chaque source de lumière (16) ayant une direction d'éclairage différente (E, E'), pour chaque image acquise, une unique source de lumière ou une combinaison de sources définie (16) étant allumée, l'unique source de lumière ou combinaison (16) étant différente pour chaque image (200) acquise,
les sources de lumière (16) ayant des intensités lumineuses respectives identiques les unes aux autres,
le dispositif électronique de calcul (18) étant configuré pour calculer, pour chaque point de la surface, à partir des images acquises une pluralité de paramètres, les paramètres comprenant des coefficients d'une équation caractérisant la réponse dudit point de la surface en fonction de la direction d'éclairage et d'une direction d'observation, puis à déduire des paramètres calculés si la surface présente un défaut audit point.

2. Dispositif de détection selon la revendication 1, **caractérisé en ce que** le dispositif optique (14) est immobile par rapport à la demi-sphère (20).

3. Dispositif de détection selon la revendication 1 ou 2, comprenant une surface d'appui (30) apte à être posée en contact avec la surface (12).

4. Dispositif de détection selon la revendication 2 et 3, **caractérisé en ce que** la direction optique (O) du dispositif optique (14) est sensiblement perpendiculaire à une surface d'appui (30) du dispositif (10) apte à être posée en contact avec la surface (12).

5. Dispositif de détection selon la revendication 3 ou 4, **caractérisé en ce que** la surface d'appui (30) est un anneau dont le rayon interne correspond à un rayon de la demi-sphère.

6. Dispositif de détection selon l'une quelconque des revendications 3 à 5, comprenant une pièce d'adaptation présentant une première extrémité apte à être monté sur la surface d'appui (30) et une deuxième extrémité apte à coopérer avec la surface (12).

7. Dispositif de détection selon l'une quelconque des revendications précédentes, comprenant un outil comprenant le dispositif optique (14) et le dispositif d'éclairage (15).

8. Dispositif de détection selon la revendication 7, **caractérisé en ce que** l'outil comprend un manche (24) apte à être saisi par un utilisateur.

9. Dispositif de détection selon la revendication 7 ou 8, **caractérisé en ce que** l'outil comprend une tête (26) définissant une concavité (28) définissant une surface interne correspondant à la demi-sphère (20) du dispositif d'éclairage (15).

10. Dispositif de détection selon la revendication 9 combinée à la revendication 3, **caractérisé en ce que** la concavité (28) est ouverte, la surface d'appui (30) s'étendant autour d'un bord de la concavité (28).

## Patentansprüche

1. Vorrichtung zur Detektion eines Defekts auf einer Oberfläche (12), die Erkennungsvorrichtung (10) umfassend:
- eine optische Vorrichtung (14), die eine optische Achse aufweist, wobei die optische Vorrichtung (14) geeignet ist, um ein Bild der Oberfläche (12) entlang einer gegebenen optischen Richtung (O) zu erfassen,
- eine Beleuchtungsvorrichtung (15), umfassend eine Vielzahl von Lichtquellen (16), wobei die Lichtquellen (16) auf einer Halbkugel (20) platziert sind, wobei jede Lichtquelle (16) einen ausgeschalteten Zustand und einen eingeschalteten Zustand aufweist, wobei jede Lichtquelle (16) eine Beleuchtungsrichtung (E, E') aufweist,
- eine elektronische Rechenvorrichtung (18),
wobei die elektronische Rechenvorrichtung (18) geeignet ist, um die optische Einrichtung (14) und die Beleuchtungseinrichtung (15) zu steuern, damit die optische Einrichtung (14) eine Vielzahl von Bildern der Oberfläche (12) erfasst, wobei für jedes Bild verschiedene Lichtquellen (16) oder verschiedene Kombinationen von Lichtquellen (16) eingeschaltet sind,
wobei die Halbkugel (20) einen Durchmesser D von 50 mm (Millimetern) oder weniger aufweist,
die Beleuchtungsvorrichtung (15) umfassend eine erste Anzahl von Lichtquellen (16), wobei die erste Anzahl zwischen 32 und 128 liegt, wobei jede Lichtquelle (16) eine verschiedene Beleuchtungsrichtung (E, E') aufweist, wobei für jedes erfasste Bild eine einzelne Lichtquelle oder eine definierte Kombination von Lichtquellen (16) eingeschaltet wird, wobei die einzelne Lichtquelle oder Kombination (16) für jedes erfasste Bild (200) verschieden ist,
wobei die Lichtquellen (16) jeweilige Lichtstärken aufweisen, die untereinander identisch sind,
wobei die elektronische Rechenvorrichtung (18) konfiguriert ist, um für jeden Punkt der Oberfläche anhand der erfassten Bilder eine Vielzahl von Parametern zu berechnen, die Parameter umfassend Koeffizienten einer Gleichung, die die Reaktion des Punkts der Oberfläche abhängig von der Beleuchtungsrichtung und einer Beobachtungsrichtung charakterisiert, und dann aus den berechneten Parametern abzuleiten, ob die Oberfläche an dem Punkt einen Defekt aufweist.

2. Erkennungsvorrichtung nach Anspruch 1, **dadurch gekennzeichnet, dass** die optische Vorrichtung (14) in Bezug auf die Halbkugel (20) unbeweglich ist.

3. Erkennungsvorrichtung nach Anspruch 1 oder 2, umfassend eine Auflagefläche (30), die geeignet ist, um in Kontakt mit der Oberfläche (12) angebracht zu werden.

4. Erkennungsvorrichtung nach Anspruch 2 und 3, **dadurch gekennzeichnet, dass** die optische Richtung (O) der optischen Vorrichtung (14) im Wesentlichen senkrecht zu einer Auflagefläche (30) der Vorrichtung (10) ist, die geeignet ist, um in Kontakt mit der Oberfläche (12) angebracht zu werden.

5. Erkennungsvorrichtung nach Anspruch 3 oder 4, **dadurch gekennzeichnet, dass** die Auflagefläche (30) ein Ring ist, dessen Innenradius einem Radius der Halbkugel entspricht.

6. Erkennungsvorrichtung nach einem der Ansprüche 3 bis 5, umfassend ein Adapterstück, das ein erstes Ende, das an der Auflagefläche (30) montiert werden kann, und ein zweites Ende aufweist, das geeignet ist, um mit der Oberfläche (12) zusammenzuwirken.

7. Erkennungsvorrichtung nach einem der vorhergehenden Ansprüche, umfassend ein Werkzeug, umfassend die optische Vorrichtung (14) und die Beleuchtungsvorrichtung (15).

8. Erkennungsvorrichtung nach Anspruch 7, **dadurch gekennzeichnet, dass** das Werkzeug einen Schaft (24) umfasst, der von einem Benutzer ergriffen werden kann.

9. Erkennungsvorrichtung nach Anspruch 7 oder 8, **dadurch gekennzeichnet, dass** das Werkzeug einen Kopf (26) umfasst, der eine Konkavität (28) definiert, die eine Innenfläche definiert, die der Halbkugel (20) der Beleuchtungsvorrichtung (15) entspricht.

10. Sensorvorrichtung nach Anspruch 9 in Kombination mit Anspruch 3, **dadurch gekennzeichnet, dass** die Konkavität (28) offen ist, wobei sich die Auflagefläche (30) um einen Rand der Konkavität (28) erstreckt.

## Claims

1. A device for detecting a defect on a surface (12), the detection device (10) comprising:
- an optical device (14) having an optical axis, the optical device (14) being able to acquire an image of the surface (12) along a given optical direction (O),
- a lighting device (15) comprising a plurality of light sources (16), the light sources (16) being arranged in a hemisphere (20), each light source (16) having an off state and an on state, each light source (16) having a lighting direction (E, E'),
- an electronic calculation device (18),
the electronic calculation device (18) being able to control the optical device (14) and the lighting device (15) so that the optical device (14) acquires a plurality of images of the surface (12), different light sources (16) or different combinations of light sources (16) being switched on for each image,
the hemisphere (20) having a diameter D smaller than or equal to 50 mm (millimeters),
the lighting device (15) comprising a first number of light sources (16), the first number being comprised between 32 and 128, each light source (16) having a different lighting direction (E, E'), for each acquired image, a single light source or a defined combination of sources (16) being illuminated, the single light source or combination (16) being different for each acquired image (200),
the light sources (16) having respective light intensities identical to one another,
the electronic calculating device (18) being configured to calculate, for each point of the surface, from acquired images, a plurality of parameters, the parameters including coefficients of an equation characterizing the response of said point of the surface as a function of the lighting direction and an observation direction, then to deduce from the calculated parameters whether the surface has a defect at said point.

2. The detection device according to claim 1, **characterized in that** the optical device (14) is immobile relative to the hemisphere (20).

3. The detection device according to claim 1 or 2, comprising a bearing surface (30) able to be placed in contact with the surface (12).

4. The detection device according to claim 2 and 3, **characterized in that** the optical direction (O) of the optical device (14) is substantially perpendicular to a bearing surface (30) of the device (10) able to be placed in contact with the surface (12).

5. The detection device according to claim 3 or 4, **characterized in that** the bearing surface (30) is a ring, the inner radius of which corresponds to a radius of the hemisphere.

6. The detection device according to any one of claims 3 to 5, comprising an adapting piece having a first end able to be mounted on the bearing surface (30) and a second end able to cooperate with the surface (12).

7. The detection device according to any one of the preceding claims, comprising a tool comprising the optical device (14) and the lighting device (15).

8. The detection device according to claim 7, **characterized in that** the tool comprises a handle (24) able to be grasped by a user.

9. The detection device according to claim 7 or 8, **characterized in that** the tool comprises a head (26) defining a concavity (28) defining an inner surface corresponding to the hemisphere (20) of the lighting device (15).

10. The detection device according to claim 9 combined with claim 3, **characterized in that** the concavity (28) is open, the bearing surface (30) extending around an edge of the concavity (28).
